# EUROPÄISCHE PATENTANMELDUNG

(11) **EP 2 439 464 A2**
(43) Veröffentlichungstag der Anmeldung: **11.04.2012**
(21) Anmeldenummer: 11183902.3
(22) Anmeldetag: 05.10.2011
(51) Int. Cl.: F24J 2/52, E04D 13/18

(54) **Einlegeprofil zur Montage von Halteprofilen für plattenförmige Module sowie dieses umfassender mehrteiliger Rahmen**

(30) Priorität: 08.10.2010 DE 102010047739
(71) Anmelder: Rehau AG & Co, 95111 Rehau (DE)
(72) Erfinder: Schork, Rainer, 91330 Bammersdorf (DE); Späte, Frank, 91058 Erlangen (DE); Röder, Bernd, 91058 Erlangen (DE)

(57) **Zusammenfassung**

Die vorliegende Erfindung bezieht sich auf ein Einlegeprofil (1) zur Montage von Halteprofilen (2) für plattenförmige Module (3), vorzugsweise Dachmodule, wobei das Einlegeprofil (1) aus einem im Wesentlichen rechtwinkligen Profil gebildet ist und wobei auf einer Seite des Einlegeprofils (1) an den Randbereichen Aufnahmen (5, 5') für Halteprofile (2) angeordnet sind. Darüber hinaus bezieht sich die vorliegende Erfindung auf einen mehrteiligen Rahmen für plattenförmige Module (3), vorzugsweise Dachmodule, mit mindestens einem Halteprofil (2) und mindestens einem Dichtprofil, wobei der mehrteilige Rahmen weiter mindestens ein erfindungsgemäßes Einlegeprofil (1) umfasst, in das das Halteprofil (2) eingelegt ist.

## Beschreibung

Die vorliegende Erfindung liegt auf dem Gebiet der modularen Dachmontagesysteme für Photovoltaikanlagen und betrifft speziell ein Einlegeprofil zur Montage von Halteprofilen für plattenförmige Module, vorzugsweise Dachmodule, sowie einen mehrteiligen Rahmen für plattenförmige Module mit mindestens einem Halteprofil und mindestens einem Dichtprofil, wobei der mehrteilige Rahmen weiter mindestens ein derartiges Einlegeprofil umfasst, in das das Halteprofil eingelegt ist.

Im Bereich der Dachmontagesysteme für Photovoltaik (PV) wächst der Markt für Indachsysteme, da diese dem gegenwärtigen Trend zu Komplettdachanlagen entgegenkommen und darüber hinaus als gebäudeintegrierte Anlagen optisch ansprechend sind. Dabei wird bei Indachsystemen die Statik durch die ohnehin vorhandene Dachkonstruktion übernommen. Weiterhin kann bei Verwendung eines Indachsystems die übliche Dacheindeckung eingespart werden.

Mehrteilige Rahmen für plattenförmige Module mit mindestens einem Halteprofil und mindestens einem Dichtprofil sind aus der DE 20 2008 009 241 U1 und DE 10 2009 051 415 A bekannt.

Unter Verwendung der in diesen Dokumenten beschriebenen mehrteiligen Rahmen lassen sich Photovoltaikanlagen als Indachsysteme auf entsprechenden Dachkonstruktionen bequem und schnell montieren. Da die Länge der Halteprofile jedoch auf die Länge der aufzunehmenden Photovoltaikmodule abgestimmt ist, ist für die horizontale Ausrichtung der Halteprofile zueinander einen Montagerahmen erforderlich. Bei ungenauer Ausrichtung der Tragelatten treten ferner Unebenheiten zwischen den einzelnen Modulen auf, die das Gesamterscheinungsbild negativ beeinflussen. Darüber hinaus werden die Halteprofile auf relativ dicken Tragelatten befestigt, wodurch eine Hinterlüftung der Module unter Umständen eingeschränkt ist.

Somit liegt die Aufgabe der vorliegenden Erfindung darin, die Nachteile des Stands der Technik zu überwinden und die Montage von plattenförmigen Modulen eines modularen Montagesystems weiter zu vereinfachen und das Gesamterscheinungsbild der resultierenden Photovoltaikanlage zu verbessern.

Diese und andere Aufgaben werden erfindungsgemäß durch ein Einlegeprofil mit den Merkmalen des Patentanspruches 1 bzw. durch einen mehrteiligen Rahmen mit den Merkmalen des Patentanspruches 7 gelöst. Bevorzugte Ausführungsformen des erfindungsgemäßen Einlegeprofils bzw. des erfindungsgemäßen mehrteiligen Rahmens sind in den jeweils davon abhängigen Ansprüchen beschrieben.

Gemäß der vorliegenden Erfindung wurde erkannt, dass die Montage durch Verwendung eines Einlegeprofils für die Halteprofile erleichtert werden kann. Das Einlegeprofil ist dabei erfindungsgemäß aus einem im Wesentlichen rechtwinkligen Profil gebildet, wobei auf einer Seite des Einlegeprofils an den Randbereichen Aufnahmen für Halteprofile angeordnet sind. Das Einlegeprofil ist dabei nicht auf die Länge des Photovoltaikmoduls beschränkt, sondern wird bevorzugt in Form langer Profilstangen (Länge von beispielsweise etwa 6 m) direkt auf den Dachsparren oder der Konterlattung befestigt, so dass Dachlatten nicht länger notwendig sind und eingespart werden können. Aufgrund der Eigenstabilität der erfindungsgemäßen Einlegeprofile (hoher Elastizitätsmodul) bleibt die Stabilität der Bedachung auch ohne Dachlattung gewährleistet. In die Aufnahmen der montierten Einlegeprofile werden dann die Halteprofile eingelegt, die dadurch horizontal und exakt parallel zueinander ausgerichtet sind, wobei sie in horizontaler Richtung verschiebbar bleiben und dadurch in vertikaler Flucht zueinander ausgerichtet werden können, was die Montierbarkeit der Photovoltaikanlage verbessert. Zusätzlich ist das Einlegeprofil aufgrund seiner Länge leicht justierbar.

Damit stellt die vorliegende Erfindung ein Einlegeprofil zur Montage von Halteprofilen für plattenförmige Module, vorzugsweise Dachmodule, zur Verfügung, wobei das Einlegeprofil aus einem im Wesentlichen rechtwinkligen Profil gebildet ist und wobei auf einer Seite des Einlegeprofils an den Randbereichen Aufnahmen für Halteprofile angeordnet sind. Ferner stellt die vorliegende Erfindung einen mehrteiliger Rahmen für plattenförmige Module, vorzugsweise Dachmodule, zur Verfügung, der mindestens ein Halteprofil, mindestens ein Dichtprofil und weiter mindestens ein erfindungsgemäßes Einlegeprofil umfasst, in das das Halteprofil eingelegt ist bzw. in das Halteprofile eingelegt sind.

Als Halteprofile, Dichtprofile sowie als weitere Komponenten des erfindungsgemäßen mehrteiligen Rahmens werden bevorzugt die in der DE 20 2008 009 241 U1 und/oder in der DE 10 2009 051 415 A beschriebenen verwendet. In diesem Zusammenhang wird auf den Offenbarungsgehalt der Schriften explizit Bezug genommen.

Gemäß der vorliegenden Erfindung kann es in Bezug auf das Einlegeprofil hilfreich sein, wenn Metall, Kunststoff oder Kombinationen daraus das Material des Einlegeprofils darstellen. Diese Materialien haben sich in der Praxis als besonders geeignet erwiesen und bieten insbesondere eine ausreichende Stabilität. Diese Materialien sind darüber hinaus im Allgemeinen leicht zu verarbeiten und korrodieren nicht. Die bevorzugten Materialien für den Profilkörper sind Acyrlnitril/Styrol/Acrylester (ASA), elastomermodifiziertes Polypropylen (EMPP), Ethylen-Propylen-Dien-Monomer-Kautschuk (EPDM), Aluminium, Kupfer und (Edel-)Stahl sowie Kombinationen der genannten Materialien, wobei Aluminium besonders bevorzugt ist. Diese Materialien sind extrudierbar bzw. strangpressbar und witterungsbeständig sowie chemikalien- und UV-beständig.

Darüber hinaus kann es von Nutzen sein, wenn die Seite des Einlegeprofils, an deren Randbereichen die Aufnahmen für Halteprofile angeordnet sind, im mittleren Bereich in Längsrichtung des Profils zumindest abschnittsweise offen ist. Bei hinreichender mechanischer Stabilität kann dadurch Material eingespart werden.

Es kann aber auch vorteilhaft sein, wenn an eine der Aufnahmen ein Steg angeformt ist, durch den zusammen mit den eingesetzten Halteprofilen ein Kanal zur Aufnahme von Leitungen gebildet ist. Ein angeformter Steg gewährleistet eine einfache, sichere und von außen nicht sichtbare Kabelführung.

Es kann auch nützlich sein, wenn in dem Einlegeprofil seitliche Belüftungsöffnungen vorhanden sind. Seitliche Belüftungsöffnungen in dem Einlegeprofil verbessern die Hinterlüftung der Module und können auf diese Weise die Effizienz der Solaranlage steigern.

Es kann sich auch als günstig erweisen, wenn in mindestens einer der Aufnahmen eine Abstützvorrichtung angeordnet ist. Eine derartige Abstützvorrichtung weist vorzugsweise einen elastischen Charakter auf und verhindert ein unbeabsichtigtes Verschieben der in das erfindungsgemäße Einlegeprofil eingelegten Halteprofile in vertikaler Richtung. Entsprechende Federn, Federbleche oder elastische Schläuche können als Beispiele für eine derartige Abstützvorrichtung genannt werden.

Gemäß der vorliegenden Erfindung kann es in Bezug auf den mehrteiligen Rahmen von Vorteil sein, wenn der Rahmen mindestens zwei horizontal nebeneinander angeordnete Einlegeprofile umfasst, wobei jeweils zwei horizontal nebeneinander angeordnete Einlegeprofile durch in die Einlegeprofile eingeschobene Verbindungsprofile miteinander verbunden sind, wobei die Verbindungsprofile an mindestens drei Seiten, vorzugsweise an vier Seiten zumindest abschnittsweise an der Innenseite der Einlegeprofile anliegen. Auf diese Weise ist gewährleistet, dass eine Montage einer Photovoltaikanlage auch auf großen Dächern (deren Breite die Länge eines Einlegeprofils übersteigt) mit hoher Genauigkeit in einfacher Weise möglich ist. Darüber hinaus sind im zusammengesetzten Zustand die Dichtprofile des erfindungsgemäßen Rahmens in vertikaler Richtung verschiebbar, so dass die Entnahme eines plattenförmigen Moduls aus einer beliebigen Stelle eines Modulfeldes gewährleistet ist.

Weiter kann es sich als hilfreich erweisen, wenn der erfindungsgemäße mehrteilige Rahmen in einem Kreuzungsbereich von Halteprofil und Dichtprofil ferner ein Kreuzstück umfasst, das derart ausgebildet ist, dass es den Kreuzungsbereich abdichtet. Als Kreuzstück wird gemäß der vorliegenden Erfindung bevorzugt das in der DE 10 2009 051 415 A beschriebene eingesetzt. Die Verwendung eines derartigen Kreuzstücks gewährleistet die Dichtheit des Systems im Kreuzungsbereich von Halteprofil und Dichtprofil für Neigungswinkel bis unter 10°. Gleichzeitig definiert es den seitlichen Abstand zwischen zwei horizontal benachbarten Halteprofilen. In Bezug auf eine kostengünstige Herstellung hat sich die Verwendung eines Spritzgussteils als Kreuzstück als besonders nützlich erwiesen. In Bezug auf das Kreuzstück ist es besonders bevorzugt, wenn das Kreuzstück eine Stützvorrichtung umfasst, die einstückig an das Kreuzstück angefügt ist und das Dichtprofil stirnseitig abstützt. Dadurch wird ein Durchrutschen des Dichtprofils aufgrund seines Gewichts und aufgrund von Witterungsbedingungen wie Temperatur und Wind wirksam verhindert.

Ein hierin beschriebenes Verfahren zur Montage eines Modulsystems mit zumindest einem plattenförmigen Modul unter Verwendung des mehrteiligen Rahmens nach einer der vorangegangenen Ausführungen, umfasst die Schritte:
a) Befestigen von Einlegeprofilen an den Dachsparren bzw. der Konterlattung oder der Dachlattung in einem Abstand, der in etwa dem Abstand zweier gegenüberliegender Kanten des plattenförmigen Moduls entspricht;
b) Einlegen eines Halteprofils in die Aufnahmen des Einlegeprofils;
c) Einbringen einer Kante des plattenförmigen Moduls in eine Aufnahme eines Halteprofils; und
d) Einbringen einer gegenüberliegenden Kante des plattenförmigen Moduls in eine Aufnahme eines anderen Halteprofils, so dass das plattenförmige Modul formschlüssig zwischen den Halteprofilen gehalten wird.

Dieses Verfahren erlaubt die werkzeuglose Montage eines Moduls zwischen zwei Halteprofilen ohne Einbringen von zusätzlichen Gummiprofilen mit dichtenden Eigenschaften.

Die Merkmale der bevorzugten Ausführungsbeispiele der Erfindung werden nachstehend mit Bezug auf die beiliegenden Zeichnungen erläutert. Dabei versteht es sich, dass sich die darin angegebenen positionsbezeichnenden Begriffe, wie oben, unten, links, rechts, vorne, hinten, innen, außen, die im Rahmen dieser Beschreibung verwendet werden, auf die jeweilige Ansicht beziehen und darüber hinaus keinen bindenden Charakter haben.

### Kurze Beschreibung der Zeichnungen

- Fig. 1: zeigt eine Schnittansicht eines erfindungsgemäßen Einlegeprofils mit eingeleg-tem Halteprofil mit Halteleiste und Haltehaken, wobei zwei über die längere Sei-te benachbarte Module ohne Kantenschutzprofil im Überlappungszustand gehal-ten werden.
- Fig. 2: zeigt eine Schnittansicht eines Einlegeprofils gemäß einer weiteren Ausfüh-rungsform der vorliegenden Erfindung mit darin eingeschobenem Verbindungs-profil.
- Fig. 3: zeigt eine Schnittansicht einer Einbausituation der in Fig. 1 dargestellten Aus-führungsform der vorliegenden Erfindung.

### Detaillierte Beschreibung der bevorzugten Ausführungsbeispiele

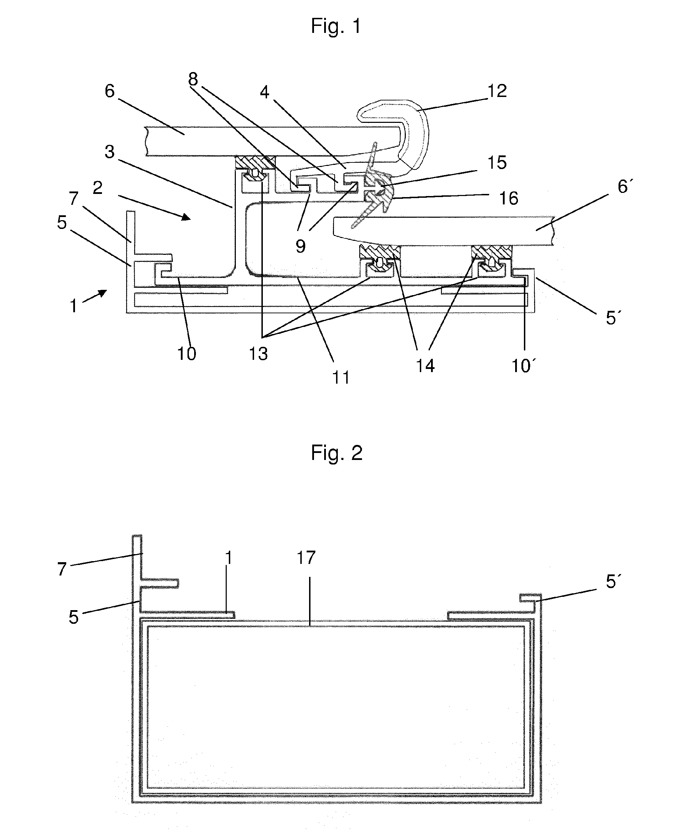

Figur 1 zeigt eine Querschnittsdarstellung eines erfindungsgemäßen Einlegeprofils 1 mit eingelegtem Halteprofil 2 mit Halteleiste 3 und Haltehaken 4, wobei zwei vertikal benachbarte Module ohne Kantenschutzprofil bestimmungsgemäß im Überlappungszustand gehalten werden.

Das Einlegeprofil 1 gemäß dieser Ausführungsform der vorliegenden Erfindung ist ein ungefähr rechtwinkliges Profil, wobei auf einer Seite des Einlegeprofils 1 an den beiden Randbereichen Aufnahmen 5, 5' für Halteprofile 2 angeordnet sind. Die Aufnahmen 5, 5' sind L-förmig und einstückig an das Profil 1 angeformt. Dabei ist es bevorzugt, dass jeweils ein Schenkel der L-förmigen Aufnahmen 5, 5' in der Verlängerung einer Seite des Profils 1 angeordnet ist. Die Länge dieses Schenkels ist jeweils derart ausgestaltet, dass eine Seite eines Halteprofils 2 in die jeweilige Aufnahme 5, 5' eingeführt werden kann. Dadurch ist das Einlegeprofil 1 zur Montage von Halteprofilen 2 für plattenförmige Module 6, 6', vorzugsweise Dachmodule, ausgebildet. Das Einlegeprofil 1 ist vorzugsweise an der Seite, an deren Randbereichen die Aufnahmen 5, 5' für Halteprofile 2 angeordnet sind, im mittleren Bereich in Längsrichtung des Profils 1 zumindest abschnittsweise offen ausgebildet. Darüber hinaus ist in bevorzugten Ausführungsformen des erfindungsgemäßen Einlegeprofils 1 ein zusätzlicher Steg 7 an eine der Aufnahmen 5 angeformt, wobei der Steg 7 sich bevorzugt im Wesentlichen in Fluchtrichtung der Seite des Profils 1 erstreckt, an den die Aufnahme 5 angeformt ist. Bei eingesetzten Halteprofilen 2 bildet der Steg 7 zusammen mit den Halteprofilen 2 einen Kanal, durch den eine einfache, sichere und von außen nicht sichtbare Kabelführung gewährleistet ist.

Zur besseren Hinterlüftung der in den erfindungsgemäßen Rahmen eingelegten Module 6, 6' kann das erfindungsgemäße Einlegeprofil 1 in bevorzugten Ausführungsformen seitliche seitliche Belüftungsöffnungen (nicht abgebildet) aufweisen. Derartige Belüftungsöffnungen befinden sich bevorzugt in den beiden einander gegenüber liegenden Seiten des Einlegeprofils 1, die nicht in Kontakt mit der Dachunterkonstruktion stehen.

In das Einlegeprofil 1 sind gemäß der vorliegenden Erfindung Halteprofile 2 für plattenförmige Module 6, 6', vorzugsweise Dachmodule eingelegt. Modularität ist die Aufteilung eines Ganzen in Teile. Die Teile werden als Module, Bauelemente oder Bausteine bezeichnet. Bei einem modularisierten Aufbau werden Gesamtsysteme aus standardisierten Einzelbauteilen zusammengesetzt. Im Rahmen der vorliegenden Erfindung geht es um Modulsysteme mit plattenförmigen Modulen 6, 6' und im speziellen um modulare Dach-Montagesysteme für Photovoltaikanlagen mit plattenförmigen Photovoltaikmodulen. Das Prinzip der Erfindung ist jedoch nicht auf das Gebiet der Photovoltaik (PV) beschränkt, sondern ist auf andere Gebiete der Technik anwendbar, bei welchen plattenförmige Module zum Einsatz kommen. Insbesondere ist das Prinzip der Erfindung auf dem Gebiet der Solarthermie, der Dachdeckung und der Fassadentechnik anwendbar.

Das erfindungsgemäße Halteprofil 2 ist bevorzugt ein Aluminium-Strangpress-Profil und weist vorzugsweise einen mehrteiligen Aufbau aus einer Halteleiste 3 und mehreren, mit der Halteleiste 3 verrasteten Haltehaken 4 auf. Diese Rastverbindung erfolgt zwischen Rasthaken 8 der Haltehaken 4 und entsprechenden Rastaufnahmen 9 der Halteleiste 3. Dabei entsteht durch die Verrastung von Halteleiste 3 und Haltehaken 4 ein Profilkörper, der derart ausgestaltet ist, dass zwei benachbarte Module 6, 6' an einer Haltestruktur (nicht abgebildet, vorzugsweise einer Dachunterkonstruktion) in einem Überlappungszustand gehalten werden, so dass sich der Profilkörper abschnittsweise zwischen den Modulen 6, 6' erstreckt und die Haltehaken 4 die Module 6, 6' randseitig umgreifen, so dass sich der Profilkörper abschnittsweise auf beiden Seiten des Moduls 6, 6', d.h. sowohl der Außenseite als auch der Innenseite des Moduls 6, erstreckt, wodurch das Modul 6 zwischen zwei Halteprofilen 2 formschlüssig gehalten wird.

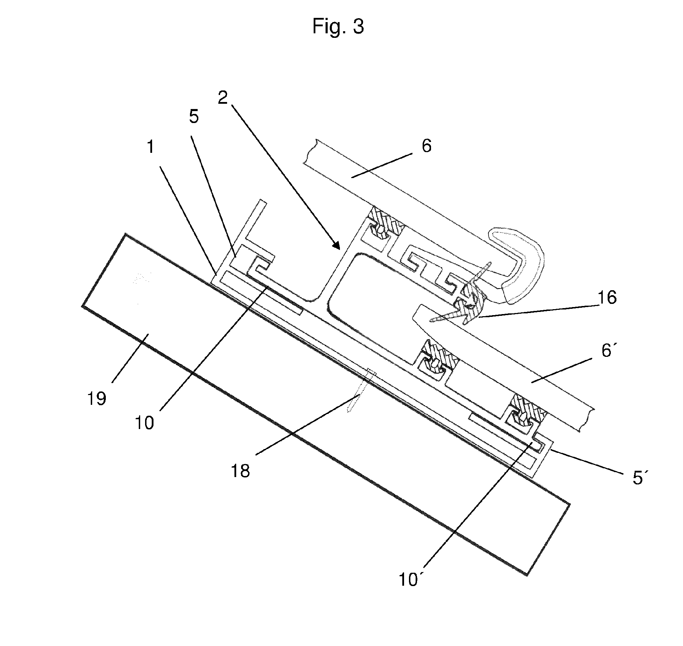

Der Begriff Überlappungszustand ist hierbei so zu verstehen, dass sich zwei benachbarte, plattenförmige Module in unterschiedlichen, vorzugsweise im Wesentlichen parallelen, Ebenen erstrecken, wobei ein Modul in einer Ansicht orthogonal zur Ebene des Moduls das benachbarte Modul zumindest teilweise verdeckt. Der Überlappungszustand benachbarter, plattenförmiger Module ist anschaulich in den Figuren 1 und 3 dargestellt.

Im Querschnitt (Fig. 1) umfasst der aus Halteleiste 3 und verrasteten Haltehaken 4 gebildete Profilkörper des Halteprofils 2 zwei Einführungsabschnitte 10, 10', die in die entsprechenden Aufnahmen 5, 5' des Einlegeprofils 1 eingeführt sind, und einen im Wesentlichen S-förmigen Halteabschnitt 11 der zwei im Wesentlichen U-förmige Modulaufnahmen definiert. Der S-förmige Halteabschnitt 11 ist dabei aus Teilen der Halteleiste 3 und dem Haltehaken 4 zusammengesetzt und umfasst drei Schenkel, die sich im Wesentlichen parallel zueinander erstrecken und dazwischen die Modulaufnahmen definieren. Am obersten, freien Schenkel sowie am sich daran anschließenden Abschnitt des S-förmigen Halteabschnitts 11 ist ein Weichauflageüberzug 12 angebracht, der das in die Modulaufnahme einzusetzende Modul schützt. Der Weichauflageüberzug 12 besteht aus einem weichen Kunststoff. Bevorzugte Materialien für die Weichauflage 12 sind TPE (thermoplastisches Elastomer) oder ASA mit SoftTouch (chemikalien- und UV-beständig) sowie EPDM.

Die Einführungsabschnitte 10, 10' erstrecken sich im Wesentlichen in Fluchtrichtung des untersten Schenkels des S-förmigen Halteabschnitts 11 und bilden mit diesem Schenkel eine im Wesentlichen ebene Auflagefläche des Halteprofils 2.

An die Halteleiste 3 sind drei Nuten 13 einstückig angeformt, in die Auflageprofile 14 für die Module 6, 6' eingezogen sind. Eine dieser Nuten 13 ist am mittleren Schenkel des S-förmigen Halteabschnitts 11 angeformt. Die beiden anderen Nuten 13 befinden sich dagegen am unteren Schenkel. Als Material für die Auflageprofile 14 wird wiederum ein weicher Kunststoff eingesetzt, wobei es sich vorzugsweise um Auflageprofile 14 aus TPE oder ASA mit SoftTouch (chemikalien- und UV-beständig) oder EPDM handelt.

An dem dem Haltehaken 4 zugewandten Ende des Teils des mittleren Schenkels, der von der Halteleiste 11 gebildet wird, ist eine Rastnase 15 einstückig angeformt. Mit dieser Rastnase 15 ist ein Dichtlippenprofil 16 mit zwei Dichtlippen verrastet. Die beiden Dichtlippen des Dichtlippenprofils 16 sind dabei derart angeordnet und ausgestaltet, dass jeweils eine der Dichtlippen im Überlappungsbereich zweier Module 6, 6' an einem der überlappenden Module 6, 6' anliegt.

In alternativen Ausführungsformen sind die Haltehaken 4 nicht rastend mit der Halteleiste 3 verbunden, sondern einstückig an die Halteleiste 3 angeformt. Dabei können sich die Haltehaken 4 im Wesentlichen über die gesamte Länge der Halteleiste 3 erstrecken. Bevorzugt bilden Halteleiste 3 und Haltehaken 4 das Halteprofil 2 als integrale Bestandteile.

Die bevorzugten Abmessungen des erfindungsgemäßen Halteprofils 2 für ein Modul 6, 6' mit einer Stärke (= Abstand zwischen Außenseite und Innenseite) von 5 mm werden nachstehend mit Bezug auf Fig. 1 erläutert. Die Auflagefläche des Halteprofils 2 weist eine Erstreckung in der Bildebene von etwa 80 mm auf, wobei der Einführungsabschnitt 10 ca. 25 mm lang ist, der Einführungsabschnitte 10' ca. 5 mm lang ist und der unterste Schenkel des Halteabschnitts 11 ca. 50 mm lang ist. Entsprechend weist das erfindungsgemäße Einlegeprofil 1 eine Breite von ca. 100 mm und eine Höhe von ca. 30 mm auf. Ein derartig flaches Einlegeprofil 1 gewährleistet eine sehr gute Hinterlüftung der plattenförmigen Module und erhöht so die Leistung der Photovoltaikanlage. In alternativen Ausführungsformen kann das Einlegeprofil 1 auch eine größere Dicke im Bereich von 40 mm bis 100 mm aufweisen. Durch eine größere Dicke des Einlegeprofils 1 wird die Stabilität des Einlegeprofils 1 verbessert, so dass das Einlegeprofil bei ausreichender Stabilität auch an Dachsparren mit großen Abstand (beispielsweise ca. 2 m) direkt befestigt werden kann.

Der erfindungsgemäße, mehrteilige Rahmen für plattenförmige Module 3, vorzugsweise Dachmodule, umfasst zumindest ein Halteprofil 2 nach einer der zuvor beschriebenen Ausführungen und ein Dichtprofil (nicht abgebildet). Durch ein vertikal liegendes Dichtprofil werden zwei plattenförmige Module 6, 6' in horizontaler Richtung dichtend (d.h. wasserundurchlässig) miteinander verbunden. Als Dichtprofil wird gemäß der vorliegenden Erfindung bevorzugt das in der DE 10 2009 051 415 A beschriebene eingesetzt.

Das erfindungsgemäß verwendete Dichtprofil ist vorzugsweise einteilig ausgebildet. Bei einem einteiligen Profil sind zwei gegenüberliegende U-förmige Dichtflächen vorgesehen, so dass das Profil nicht herausrutschen kann. Dadurch wird ebenfalls ein einfacher Seitenanschluss (Ortgang) ermöglicht.

Das Dichtprofil des erfindungsgemäßen, mehrteiligen Rahmens wird exemplarisch für eine einteilige Ausführung beschrieben. Das vertikal angeordnete Dichtprofil für plattenförmige Module weist einen im Wesentlichen H-förmigen Profilkörper auf, durch den zwei horizontal benachbarte Module in einer Ebene liegend abdichtend gehalten werden, so dass sich der Profilkörper abschnittsweise zwischen den Modulen erstreckt. Jeweils zwei sich im Wesentlichen parallel erstreckende Schenkel des H-förmigen Profilkörpers definieren eine Modulaufnahme. Am freien Ende der Schenkel können jeweils Dichtabschnitte in und entgegen einer Einsteckrichtung in die Modulaufnahme vorstehen. Die Dichtabschnitte sind im Mündungsbereich jeder Modulaufnahme angeformt, vorzugsweise koextrudiert. Jeder der Dichtabschnitte besteht vorzugsweise aus einem unterschiedlichen, vorzugsweise weicheren Kunststoff als ein dahinterliegender Abschnitt des Profilkörpers, an welchen der Dichtabschnitt angeformt ist. Optional kann ein Kantenschutzprofil verwendet werden, um das plattenförmige Modul während des Transports und der Montage vor Ort zu schützen und gleichzeitig eine Dichtfunktion zu übernehmen. Das Kantenschutzprofil umfasst einen U-förmigen Querschnitt und ist aus Kunststoff gefertigt. Das Kantenschutzprofil ist auch als Adapter für unterschiedliche Modulstärken einsetzbar.

Vorzugsweise können in das Dichtprofil zwei U-förmig ausgebildete Verstärkungseinlagen aus Metall (z.B. Stahlblech mit 0,5 mm Stärke) in den Profilkörper derart eingebettet sein, dass sich die Schenkel jeder Verstärkungseinlage innerhalb der gegenüber liegenden Schenkel einer Modulaufnahme erstrecken. Am Boden jeder Modulaufnahme, gegenüber der Mündung, ist vorzugsweise eine Weichauflage angeformt, vorzugsweise koextrudiert.

Die Weichauflage besteht aus einem weicheren Kunststoff als ein dahinterliegender Abschnitt des Profilkörpers, an welchen die Weichauflage angeformt sein kann. Bevorzugte Materialien für den Dichtabschnitt und die Weichauflage sind EPDM, TPE oder ASA mit SoftTouch (chemikalien- und UV-beständig). Bevorzugte Materialien für den Profilkörper des Dichtprofils sind Aluminium und EPDM.

Im Kreuzungsbereich von Halteprofil 2 und Dichtprofil befindet sich vorzugsweise ein Kreuzstück (nicht dargestellt), durch das der Kreuzungsbereich abgedichtet wird. Als Kreuzstück wird gemäß der vorliegenden Erfindung bevorzugt das in der DE 10 2009 051 415 A beschriebene eingesetzt.

Das Kreuzstück ist auf der Halteleiste 3 liegend und zwischen zwei benachbarten Halteprofilen 2 angeordnet. Dadurch gewährleistet die Verwendung eines derartigen Kreuzstücks die Dichtheit des Systems im Kreuzungsbereich von Halteprofil 2 und Dichtprofil für Neigungswinkel bis unter 10°. Das Kreuzstück weist eine im Wesentlichen rechtwinklige Grundplatte auf, an deren Ober- und Unterseite Laschen für die Halterung und Abstützung des Kreuzstücks am Halteprofil 2 angeformt sind. Vorzugsweise befinden sich an der Oberseite der Grundplatte ein Paar derartiger Laschen und an der Unterseite zwei Paar derartiger Laschen. Die Laschenpaare sind jeweils an den Seiten der Grundplatte parallel in einem Abstand angeordnet, der die Breite des verwendeten Dichtprofils geringfügig übersteigt. Das obere, an der Unterseite der Grundplatte angeformte Laschenpaar gewährleistet darüber hinaus ein stabiles Anliegen des Kreuzstücks an den Halteleisten 3. Bevorzugt ist an die Grundplatte des Kreuzstücks einstückig eine Stützvorrichtung angeformt, die das Dichtprofil abstützt und dadurch wirksam dessen Abrutschen verhindert. Das Kreuzstück ist vorzugsweise als Spritzgussteil ausgebildet. ASA oder EPDM werden bevorzugt als Materialien für das Kreuzstück eingesetzt.

Die Dimensionen des Halteprofils 2 und des Dichtprofils sind derart auf die Abmessungen der plattenförmigen Module 6, 6' abgestimmt, dass die gewünschten Halte-, Sicherungs- und Dichtfunktionen gewährleistet sind. Der Profilkörper des Halteprofils 2 ist vorzugsweise ein Stranggussprofil aus Aluminium und der Profilkörper des Dichtprofils 4, 9 ist vorzugsweise ein Extrusionsprofil aus Kunststoff, bevorzugt ASA oder EPDM.

Je nach Bedarf kann das Halteprofil 2 und/oder das Dichtprofil modifiziert werden, um verschiedenartige Anforderungen zu erfüllen: Beispielsweise kann der Profilkörper des Halteprofils 2 und/oder des Dichtprofils eine Verstärkungseinlage enthalten. Außerdem kann der Profilkörper des Dichtprofils einen Kontaktabschnitt zur punkt- und/oder linienförmigen Kontaktierung eines Moduls aufweisen. Der Kontaktabschnitt ist vorzugsweise auf beiden Seiten einer Modulaufnahme vorgesehen, um ein mit einem Kantenschutzprofil versehenes Modul formschlüssig aufzunehmen, so dass sich die eine Modulaufnahme definierenden Schenkel parallel zum Modul erstrecken und der Kontaktabschnitt mit einer Außenseite oder Innenseite eines Moduls punkt- und/oder linienförmig in Kontakt gelangt. Ferner kann der Profilkörper des Dichtprofils zur Abdichtung eines Spalts zwischen dem Dichtprofil und einem Modul einen oder mehrere Dichtabschnitte aufweisen, wobei die Dichtabschnitte jeweils in etwa im Mündungsbereich der jeweiligen Modulaufnahmen des Dichtprofils angeordnet sind.

In Fig. 2 ist eine Schnittansicht eines Einlegeprofils 1 gemäß einer weiteren Ausführungsform der vorliegenden Erfindung mit darin eingeschobenem Verbindungsprofil 17 gezeigt. Im Allgemeinen wird das erfindungsgemäße Einlegeprofil 1 in Form von Profilstangen mit einer Länge von beispielsweise etwa 6 m hergestellt. Soll unter Verwendung des erfindungsgemäßen mehrteiligen Rahmens eine Photovoltaikanlage mit einer darüber liegenden Breite montiert werden, kann in eine Seite eines Einlegeprofils 1 ein Verbindungsprofil eingeschoben werden. Das Verbindungsprofil hat einen im Wesentlichen rechtwinkligen Querschnitt und ist derart dimensioniert, dass es sich derart in das Einlegeprofil 1 einschieben lässt, dass es an dessen Innenseite an mindestens drei Seiten zumindest abschnittsweise anliegt. Die Länge des Verbindungsprofils beträgt bevorzugt 30 cm bis 50 cm und wird bis etwa zur Hälfte in ein Einlegeprofil 1 eingeschoben. Damit steht die andere Hälfte über das Einlegeprofil 1 hervor, so dass darauf ein weiteres erfindungsgemäßes Einlegeprofil 1 aufgeschoben werden kann. Die auf diese Weise verbundenen erfindungsgemäßen Einlegeprofile 1 sind automatisch in horizontaler Richtung zueinander ausgerichtet. Analog ist die Anbindung weiterer erfindungsgemäßer Einlegeprofile 1 in horizontaler Richtung möglich. Ein Verfahren zur Montage eines Modulsystems mit zumindest einem plattenförmigen Modul 6, 6' unter Verwendung des Halteprofils 2 nach einer der vorangegangenen Ausführungen, umfasst die Schritte:
a) Befestigen von Einlegeprofilen 1 an den Dachsparren bzw. der Konterlattung oder der Dachlattung in einem Abstand, der in etwa dem Abstand zweier gegenüberliegender Kanten des plattenförmigen Moduls entspricht;
b) Einlegen der Einführungsabschnitte 10, 10' eines Halteprofils 2 in die Aufnahmen 5, 5' eines Einlegeprofils 1;
c) Einbringen einer Kante eines plattenförmigen Moduls 6, 6' in eine Aufnahme eines Halteprofils 2; und
d) Einbringen einer gegenüberliegenden Kante des plattenförmigen Moduls 6, 6' in eine Aufnahme eines anderen Halteprofils 2, so dass das plattenförmige Modul 6, 6' formschlüssig zwischen den Halteprofilen 2 gehalten wird; sowie optional
e) Einlegen eines Kreuzstücks zwischen zwei horizontal benachbarte Halteprofile 2; und
f) Einschieben eines Dichtprofils.

In dem Verfahren werden zunächst mehrere Einlegeprofile 1 unter Verwendung von Befestigungsmitteln 18 (vorzugsweise Schrauben und/oder Nägeln) auf einer Dachunterkonstruktion 19 (vorzugsweise einem Dachsparren, der Konterlattung bzw. der Dachlattung) befestigt. Dazu werden die Einlegeprofile 1 mit der den Aufnahmen 5, 5' gegenüber liegenden Seite jedes Einlegeprofils 2 an der Dachunterkonstruktion 19 angelegt. Anschließend wird ein Befestigungsmittel 18 durch die angelegte Seite des Einlegeprofils 1 in die Dachunterkonstruktion 19 geschraubt bzw. geschlagen. Der Abstand zwischen dem oberen Halteprofil 2 und dem unteren Halteprofil 2 ist derart zu bemessen, dass die nachfolgend beschriebenen Schritte ausführbar sind.

Der vordere Einführungsabschnitt 10 des Halteprofils 2 wird nun in die Aufnahme 5 des Einlegeprofils 1 eingelegt und bis zum Anschlag nach oben geschoben. Daraufhin wird das Halteprofil 2 mit seinem Befestigungsabschnitt 11 auf das Einlegeprofil 1 aufgelegt und nach unten geschoben, so dass der andere Einführungsabschnitt 10' des Halteprofils 2 in die weitere Aufnahme 5' des Halteprofils 2 eindringt. Anschließend wird eine Kante eines Moduls 6, 6' in die untere Modulaufnahme des oberen Halteprofils 2 eingeführt, während sich die untere Kante außerhalb der oberen Modulaufnahme des unteren Halteprofils 2 befindet. Das vordere Ende des Moduls 6, 6' wird nun bis zum Anschlag in die untere Modulaufnahme des oberen Halteprofils 2 eingeschoben.

Der Abstand zwischen dem oberen Einlegeprofil 1 und dem unteren Einlegeprofil 1 ist derart zu bemessen, dass die untere Kante des Moduls 6, 6' in die obere Modulaufnahme des unteren Halteprofils 2 einführbar ist, wenn das obere Ende des Moduls 6, 6' bis zum Anschlag in die untere Modulaufnahme des oberen Halteprofils 2 eingeführt ist. Daraufhin wird das untere Ende des Moduls 6, 6' in die obere Modulaufnahme des unteren Halteprofils 2 vollständig eingerastet. Der Abstand der Halteprofile 2 ist dabei so dimensioniert, dass das Modul 6, 6' in dieser Stellung formschlüssig zwischen dem oberen Halteprofil 2 und dem unteren Halteprofil 2 gehalten wird und nicht weiter in die untere Aufnahme des oberen Halteprofils 2 eingeschoben werden kann. Mit benachbarten Modulen 6, 6' wird in gleicher Weise verfahren. In dieser Stellung sind die Module 6, 6' bestimmungsgemäß gegenüber den Halteprofilen 2 angeordnet und durch Dichtlippen des Dichtlippenprofils 16 gegenüber dem oberen Modul 6 und dem unteren Modul 6' abgedichtet. Das Ergebnis dieser Einbausituation der in Fig. 1 dargestellten Ausführungsform des erfindungsgemäßen mehrteiligen Rahmens ist in Fig. 3 in einer Querschnittsdarstellung gezeigt.

Weitere plattenförmige Module 6, 6' können in gleicher Weise montiert werden. Die Anordnung kann nach oben und unten sowie nach links und rechts beliebig erweitert werden. Bei einer Erweiterung der Anordnung nach links und rechts ist ein zu dem ersten plattenförmigen Modul benachbartes Modul nach der Abfolge der Schritte b) bis d) zu montieren, wobei zwischen horizontal benachbarten Modulen 6, 6' ein Dichtprofil abdichtend anzuordnen ist. Unterschreitet die Breite der gesamten Photovoltaikanlage die Länge des Einlegeprofils 1, wird dieses entsprechend abgelängt. Übersteigt die Breite der Photovoltaikanlage dagegen die Länge des Einlegeprofils 1, werden unter Verwendung von Verbindungsprofilen 17 wie in Bezug auf Figur 2 beschrieben weitere Einlegeprofile 1 in horizontaler Richtung angebunden. Bei einer Erweiterung der Anordnung nach oben und unten sind weitere Einlegeprofile 1 und weitere Halteprofile 2 vorzusehen, wobei nach der Abfolge der Schritte a) bis d) vorzugehen ist. Die nach oben und unten benachbarten Module und Dichtprofile werden im Überlappungszustand angeordnet, so dass Niederschläge keine ungewollten Fließrichtungen einnehmen.

In der resultierenden Photovoltaikanlage sind jeweils zwei plattenförmigen Module 6, 6' in vertikaler Richtung durch ein in eine erfindungsgemäße Einlegelatte 1 eingelegtes Halteprofil 2 mit Halteleiste 10 und Haltehaken 11 im Überlappungszustand gehalten. Zwei horizontal benachbarte Module 6, 6' sind jeweils durch ein Dichtprofil 4 abdichtend verbunden. Die Dichtprofile sind ebenfalls geschindelt bzw. im Überlappungszustand angeordnet.

Der Kreuzungsbereich zwischen Halteprofil 2 und Dichtprofil ist jeweils durch ein Kreuzstück abgedichtet.

Die Anschlüsse an First und Traufe lassen sich in einfacher Weise wie in der DE 20 2008 009 241 U1 und/oder in der DE 10 2009 051 415 A beschriebenen bewerkstelligen.

Der seitliche Dachanschluss wird beidseitig mit dem Dichtprofil bewerkstelligt. Dazu wird ein gekantetes Blech für den seitlichen Dachanschluss in einer Modulaufnahme des Dichtprofils formschlüssig aufgenommen. Die nach oben und unten benachbarten Module und Dichtprofile werden im Überlappungszustand angeordnet. Ein zusätzliches Profil ist somit nicht erforderlich.

Das Einlegeprofil gemäß der vorliegenden Erfindung ermöglicht aufgrund der Länge der Einlegeprofile (beispielsweise etwa 6 m) eine schnelle Montage und eine exakte Ausrichtung der in das Einlegeprofil eingesetzten Halteprofile sowohl in horizontaler als auch in vertikaler Richtung. Nach dem Einlegen bleiben die Halteprofile in horizontaler Richtung verschiebbar, was eine optimale Justierbarkeit der Halteprofile ermöglicht. Eine beliebige Verlängerung des Einlegeprofils ist durch eine einfache Kupplung mit einem Verbindungsprofil möglich, das lediglich in horizontal benachbarte Einlegeprofile eingeschoben wird. Aufgrund ihrer Länge kann das erfindungsgemäße Einlegeprofil auch einfach justiert werden. Aufgrund des sehr hohen Elastizitätsmoduls des erfindungsgemäßen Einlegeprofils kann die Dachlattung eingespart werden, so dass die erforderlichen Holzarbeiten reduziert sind. Darüber hinaus ist das erfindungsgemäße Einlegeprofil sehr gerade und fungiert daher gleichzeitig als Richtlatte, so dass ein Höhenausgleich bei unregelmäßigen Dachunterkonstruktionen sehr einfach erfolgen kann. Somit sind sehr ebene Photovoltaik-Generatorflächen, die das optische Erscheinungsbild der Photovoltaik-Anlagen maßgeblich beeinflussen, einfacher zu realisieren. Ferner ist bei Verwendung des erfindungsgemäßen Einlegeprofils aufgrund dessen sehr hohen Elastizitätsmoduls der Längsverzug des Daches in horizontaler Richtung annähernd vollständig unterbunden, während der Verzug des Daches in vertikaler Richtung durch die hohen Toleranzen des erfindungsgemäßen mehrteiligen Rahmens sehr gut kompensiert werden kann.

Da der Elastizitätsmodul des erfindungsgemäßen Einlegeprofils durch Erhöhung seiner Dicke weiter erhöht werden kann, können auch sehr große Sparrenabstände, die beispielsweise bei Hallendächern auftreten, durch die Verwendung erfindungsgemäßer Einlegeprofile überbrückt werden. Dadurch können Kosten für die Dachunterkonstruktion reduziert werden, da dafür weniger Dachsparren verwendet werden müssen und die Querträger vollständig durch das erfindungsgemäße Einlegeprofil ersetzt werden können. Die Verwendung erfindungsgemäßer Einlegeprofile führt darüber hinaus zu einer hervorragenden Hinterlüftung der Photovoltaik-Module, so dass die Leistung der Photovoltaik-Anlage durch die Verwendung des erfindungsgemäßen Einlegeprofils erhöht werden kann.

Zusammenfassend ist der erfindungsgemäße mehrteilige Rahmen zur Montage einer Photovoltaikanlage als Indachsystem hervorragend geeignet, aber auch als Aufdachsystem und Freiflächensystem.

## Patentansprüche

1. Einlegeprofil (1) zur Montage von Halteprofilen (2) für plattenförmige Module (6, 6'), vorzugsweise Dachmodule, **dadurch gekennzeichnet, dass** das Einlegeprofil (1) aus einem im Wesentlichen rechtwinkligen Profil gebildet ist, wobei auf einer Seite des Einlegeprofils (1) an den Randbereichen Aufnahmen (5, 5') für Halteprofile (2) angeordnet sind.

2. Einlegeprofil (1) nach Anspruch 1, **dadurch gekennzeichnet, dass** Metall (insbesondere Aluminium), Kunststoff oder Kombinationen daraus das Material des Einlegeprofils (1) darstellen.

3. Einlegeprofil (1) nach Anspruch 1 oder Anspruch 2, **dadurch gekennzeichnet, dass** die Seite des Einlegeprofils (1), an deren Randbereichen die Aufnahmen (5, 5') für Halteprofile (2) angeordnet sind, im mittleren Bereich in Längsrichtung des Profils (1) zumindest abschnittsweise offen ist.

4. Einlegeprofil (1) nach einem der vorangegangenen Ansprüche, **dadurch gekennzeichnet, dass** an eine der Aufnahmen (5) ein zusätzlicher Steg (7) angeformt ist, durch den zusammen mit den eingesetzten Halteprofilen (2) ein Kanal zur Aufnahme von Leitungen gebildet ist.

5. Einlegeprofil (1) nach einem der vorangegangenen Ansprüche, **dadurch gekennzeichnet, dass** in dem Einlegeprofil (1) seitliche Belüftungsöffnungen vorhanden sind.

6. Einlegeprofil (1) nach einem der vorangegangenen Ansprüche, **dadurch gekennzeichnet, dass** in mindestens einer der Aufnahmen (5, 5') eine Abstützvorrichtung angeordnet ist.

7. Mehrteiliger Rahmen für plattenförmige Module (6, 6'), vorzugsweise Dachmodule, umfassend mindestens ein Halteprofil (2) und mindestens ein Dichtprofil, **dadurch gekennzeichnet, dass** der mehrteilige Rahmen weiter mindestens ein Einlegeprofil (1) nach einem der Ansprüche 1 bis 4 umfasst, in das das Halteprofil (2) eingelegt ist.

8. Mehrteiliger Rahmen nach Anspruch 7, **dadurch gekennzeichnet, dass** der Rahmen mindestens zwei horizontal nebeneinander angeordnete Einlegeprofile (1) umfasst, wobei jeweils zwei horizontal nebeneinander angeordnete Einlegeprofile (1) durch in die Einlegeprofile (1) eingeschobene Verbindungsprofile (17) miteinander verbunden sind, wobei die Verbindungsprofile an mindestens drei Seiten zumindest abschnittsweise an der Innenseite der Einlegeprofile (1) anliegen.

9. Mehrteiliger Rahmen nach Anspruch 7 oder Anspruch 8, **dadurch gekennzeichnet, dass** der Rahmen in einem Kreuzungsbereich von Halteprofil (2) und Dichtprofil ferner ein Kreuzstück umfasst, das derart ausgebildet ist, dass es den Kreuzungsbereich abdichtet, den seitlichen Abstand zwischen zwei horizontal benachbarten Halteprofilen (2) definiert und ein Abrutschen des Dichtprofils verhindert.
